# EUROPÄISCHE PATENTANMELDUNG

(11) **EP 0 976 937 A2**
(43) Veröffentlichungstag der Anmeldung: **02.02.2000**
(21) Anmeldenummer: 99890229.0
(22) Anmeldetag: 06.07.1999
(51) Int. Cl.: F16C 11/06, F16C 11/10

(54) **Gelenkanordnung**

(30) Priorität: 30.07.1998 AT 131698
(71) Anmelder: Ernst Krause & Co., 1021 Wien (AT)
(72) Erfinder: Holy, Franz, Ing., 2000 Stockerau (AT); Steiner, Karl, 1230 Wien (AT)
(74) Vertreter: Müllner, Erwin, Dr.

(57) **Zusammenfassung**

Eine Gelenkanordnung für Werkzeugmaschinen zur stabkinematischen Positionierung von Werkzeug und Werkstück zueinander umfasst auf Schlitten (3) sowie auf einer Trägerplatte für jedes Gelenk eine Flanschbüchse (1) mit einer zentralen Bohrung. Die Flanschbüchse (1) ist in einer Ausnehmung (2) des Schlittens (3) bzw. der Trägerplatte fein justierbar. Das Gelenk wird über der Flanschbüchse (1) angeordnet. Es umfasst in einem Gehäuse (6, 15) eine Gelenkskugel (7), ein Gelenkskreuz mit Schwenkwelle (16) und Schwenkachse (17) oder dergleichen, mit durch den Schwenkmittelpunkt (M) durchgehender Bohrung (10, 20). Das Gelenk trägt einen Stab (8) als Konstruktionselement der Parallelstabkinematik. Ein Justierstift (12) ist zum fluchtenden Ausrichten der Bohrung (10, 20) im Gelenk mit der Bohrung in der Flanschbüchse (1) vorgesehen. Schrauben im Schlitten (3) oder der Trägerplatte durchsetzen das Gehäuse (6, 15) mit Spiel. Nach Positionierung des Gehäuses (6, 15) bezüglich der justierten Flanschbüchse (1) werden die Schrauben (11, 23) gegen den Schlitten (3) oder die Trägerplatte festgezogen.

## Beschreibung

Die Erfindung betrifft eine Gelenkanordnung für Werkzeugmaschinen zur stabkinematischen Positionierung von Werkzeug und Werkstück relativ zueinander, wobei auf der Werkzeugmaschine insbesondere drei Schlitten verfahrbar sind, die Gelenke für z.B. je zwei Stäbe tragen, deren andere Enden über Gelenke eine Trägerplatte für Werkzeug oder Werkstück im Raum festlegen. Klassische Schlittensysteme im Maschinenbau folgen streng den kartesischen Koordinaten. Die linearen Relativbewegungen zwischen Werkzeug und Werkstück werden durch drei übereinander liegende Schlitten erreicht. Der Z-Schlitten trägt den X-Schlitten und auf letzterem ist der Y-Schlitten angeordnet. Damit ist eine Positionierung in der Ebene und der Höhe nach möglich. Für Freiformflächen sind zwei weitere Achsen erforderlich. Es werden also den drei linearen Achsen noch zwei rotatorische bzw. Schwenkbewegungen überlagert. Dieser Aufbau entspricht einer Serienanordnung ("Serienschaltung") der Schlitten bzw. Achsenkomponenten, wobei die Kräfte, z.B. Schnittkräfte, von Schlitten zu Schlitten übernommen und bis ins Maschinenbett weitergeleitet werden, Fehler sich addieren und infolge der Anordnung aufeinander robuste, steife und schwere Konstruktionen erforderlich sind.

Dem vorgenannten seriellen, kartesischen Schlittenaufbau steht heute die Parallelstabkinematik gegenüber. Hier wird beispielsweise eine die Frässpindel tragende Trägerplatte durch drei Paare von Stäben im Raum fixiert, wobei die Stäbe einerseits auf der Trägerplatte und paarweise auf je einem Schlitten angelenkt sind. Durch Verfahren der Schlitten in ihren linearen Führungen verschieben sich die Stabpositionen und damit ändert sich die Lage der Trägerplatte im Raum. Die Trägerplatte wird bei diesem System somit nicht durch aufeinander aufbauende Strukturen sondern durch parallel geschaltete Strukturen, nämlich durch die Stäbe, die alle an der Trägerplatte angreifen, positioniert. Diese Parallelstabkinematik ist auch unter dem Begriff Hexapod-Prinzip bekannt und wird in der DE 196 11 130 A1 sowie der DE 197 01 830 A1 näher beschrieben.

Im Rahmen der mit den verschiedensten Stabanordnungen zweidrei- und mehrachsig beweglichen Trägerplatte bzw. des mit Hilfe der Trägerplatte unter Einbeziehung der Parallelstabkinematik positionierbaren Werkzeuge sind die in allen Fällen benötigten Gelenke an den Stabenden besonders kritische Bauelemente. Es sind nämlich Fehler bezüglich des Schwenkmittelpunktes (M) nicht ohne weiters auf elektronischem Weg durch zusätzliche Vorschübe kompensierbar. Vielmehr bedeuten solche Fehler ein sofortiges Klemmen der gesamten Einrichtung sowie ein Verziehen der Trägerplatte ohne Kompensationsmöglichkeit. Die Positionierung mit der nötigen Genauigkeit ist zudem im Rahmen der Möglichkeiten in der Produktionshalle problematisch.

Die Erfindung zielt darauf ab, eine Gelenkanordnung anzugeben, die eine eindeutige Festlegung des Schwenkmittelpunktes ermöglicht. Dies wird dadurch erreicht, dass auf den Schlitten und bzw. oder der Trägerplatte für jedes Gelenk eine Flanschbüchse mit Bohrung in der Schlitten- bzw. Trägerplattenebene feinjustierbar befestigt ist, dass der Flanschbüchse ein Gehäuse für das Gelenk, beispielsweise eine Gelenkskugel oder ein Gelenkskreuz, mit angeschlossenem Stab oder einer Stabhalterung, zugeordnet ist und das Gelenk in seinem mit dem Stab oder der Stabhalterung unmittelbar verbundenen Gelenksteil eine durchgehende Bohrung durch den Schwenkmittelpunkt (M), beispielsweise Kugelmittelpunkt oder Gelenkskreuzmittelpunkt, aufweist, die zur Positionierung des Schwenkmittelpunktes (M) fluchtend auf die Bohrung der Flanschbüchse ausrichtbar und das Gehäuse reibungsschlüssig mit dem Schlitten oder der Trägerplatte festschraubbar ist. Die Flanschbüchse wird im Feinmessraum in der Schlitten- bzw. Trägerplattenebene exakt justiert, wozu Einstellschrauben, die die Flanschbüchsenposition gegenüber Flanschbefestigungsschrauben festlegen, in zwei Achsenrichtungen vorgesehen sind. Sobald die, z.B. zwölf, Flanschbüchsen sowohl auf den, z.B. drei, Schlitten als auch auf der Trägerplatte für ein Parallelstabsystem von sechs Stäben exakt positioniert sind, kann in der Werkshalle weitergearbeitet werden, denn es ist problemlos, die durchgehende Bohrung im jeweils mit dem Stab unmittelbar verbundenen Gelenksteil, also z.B. der Kugel oder dem entsprechenden Gelenksteil des Gelenkskreuzes fluchtend mit der Flanschbüchsenbohrung auszurichten. Das Gelenksgehäuse wird nach dem Ausrichten am Schlitten oder an der Trägerplatte festgezogen. Sollte ein neuerliches Ausrichten, z.B. nach einer Kollision, notwendig sein, so kann dies durch Lösen der Gehäuseverbindung, Ausrichten durch fluchtendes Positionieren der Bohrung im kinematisch letztgeordneten Gelenkteil mit der Flanschbüchsenbohrung und Festziehen der Gehäusebefestigung rasch und einfach mit den in der Produktionshalle zur Verfügung stehenden Mitteln durchgeführt werden.

Das Kugelgelenk ist die einfachste Realisierung, das mit seinem Gehäuse und zusammen mit der Flanschbüchse die Gelenkanordnung bildet.

Das Gelenkskreuz bildet das Kugelgelenk durch zwei Achsen nach. Dabei ist es zweckmäßig, wenn das Gelenkskreuz eine drehbar im Gehäuse gelagerte Schwenkwelle in einer Parallelebene zur Schlitten- oder Trägerplattenebene aufweist und wenn die Schwenkwelle eine Schwenkachse trägt, die in einer Normalebene zur Mittelachse der Schwenkwelle drehbar ist und die mit der durchgehenden Bohrung für das fluchtende Ausrichten des Schwenkmittelpunktes (M) mit der Achse der Bohrung der Flanschbüchse ausgebildet ist. Der Schwenkmittelpunkt des Gelenks liegt im Kreuzungspunkt der Mittellinien der Schwenkwelle und der Schwenkachse. Dabei ist der Stab oder die Stabhalterung auf der Schwenkachse schwenkbar gelagert und die Mittelachse des Stabes bzw. der Stabhalterung durchsetzt den Schwenkmittelpunkt des Gelenkes. Im Sinne der Lehre der Erfindung ist der kinematisch letztgeordnete Gelenkteil, der somit mit dem Stab oder der Stabhalterung unmittelbar verbunden ist beim Gelenkskreuz die Schwenkachse, die vorschriftsgemäß die durchgehende Bohrung trägt.

Eine in der Praxis mit besonderem Erfolg realisierte Ausführungsform ist dadurch gekennzeichnet, dass in Längsmitte - und einem Durchmesser der Schwenkwelle folgend - die Schwenkachse eingesetzt ist, die beiderseits in der Zylinderfläche der Schwenkwelle endet und die die durchgehende den Schwenkmittelpunkt durchsetzende Bohrung aufweist und dass auf der Schwenkachse mindestens ein Lagerring mit dem radial anschließenden Stab oder der Stabhalterung drehbar vorgesehen ist. Die gesamte Baueinheit ist auf diese Weise kompakt ausgeführt und in die Schwenkwelle integriert. Als Lagerringe können Wälzlager herangezogen werden. Dabei ist es zweckmäßig, wenn die Schwenkwelle einen Schlitz im Ausmaß des Schwenkwinkels des Stabes oder der Stabhalterung um die Schwenkachse und das Gehäuse eine entsprechende Ausnehmung im Ausmaß der Schwenkwinkel der Schwenkwelle und der Schwenkachse aufweist. Es ergibt sich dadurch ein Fenster im Gehäuse, das die Schwenkbewegungen des Stabes in allen Richtungen zulässt.

Ferner ist es zweckmäßig, wenn das Gehäuse eine Öffnung in Fortsetzung der fluchtenden Bohrungen im Gelenk und in der Flanschbüchse aufweist und wenn ein Justierstift vorgesehen ist, dessen Durchmesser den Bohrungsdurchmessern entspricht und der zum Ausrichten des Schwenkmittelpunktes (M) auf die Flanschbüchsenachse in die Bohrungen einschiebbar ist. Es muss also das Gelenk in eine Position gebracht werden, in der die diametrale Kugel- oder die Schwenkachsenmittelbohrung im Bereich der Gehäuseöffnung liegt. Dann wird das Gehäuse auf seiner Montageebene so verschoben, dass der Justierstift weiter in die Flanschbüchsenbohrung eingeschoben werden kann. Diese Gehäuseposition wird durch Festziehen der mit Spiel in Flanschbohrungen liegenden Schrauben fixiert. Die Höhenlagenjustierung erfolgt durch Unterlegen von Passplatten.

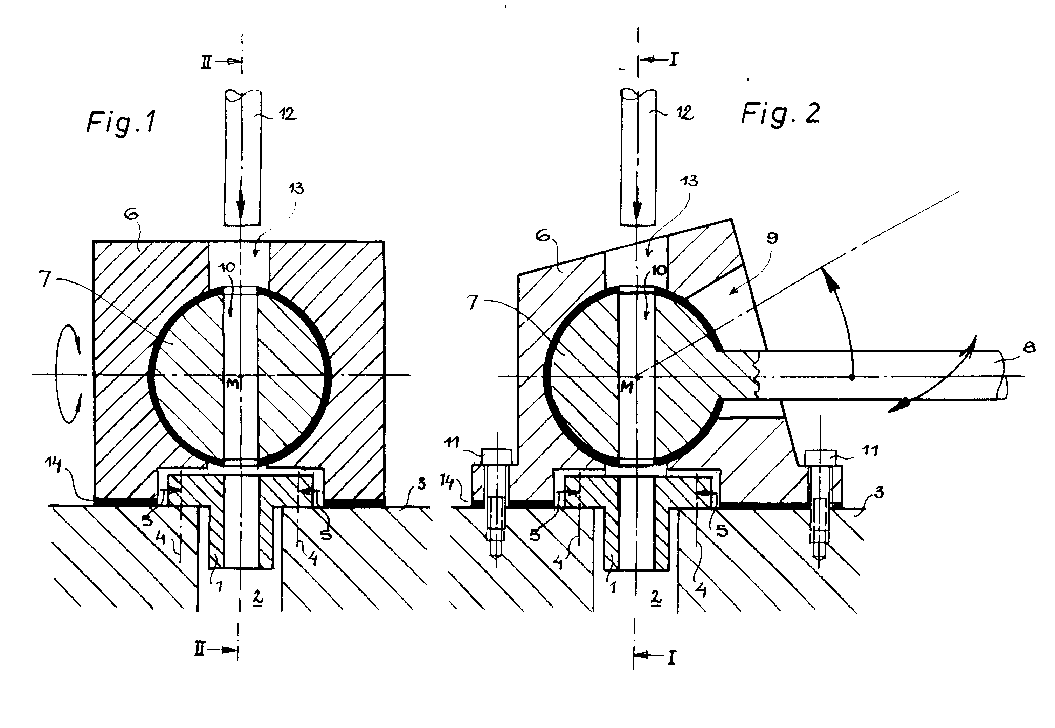

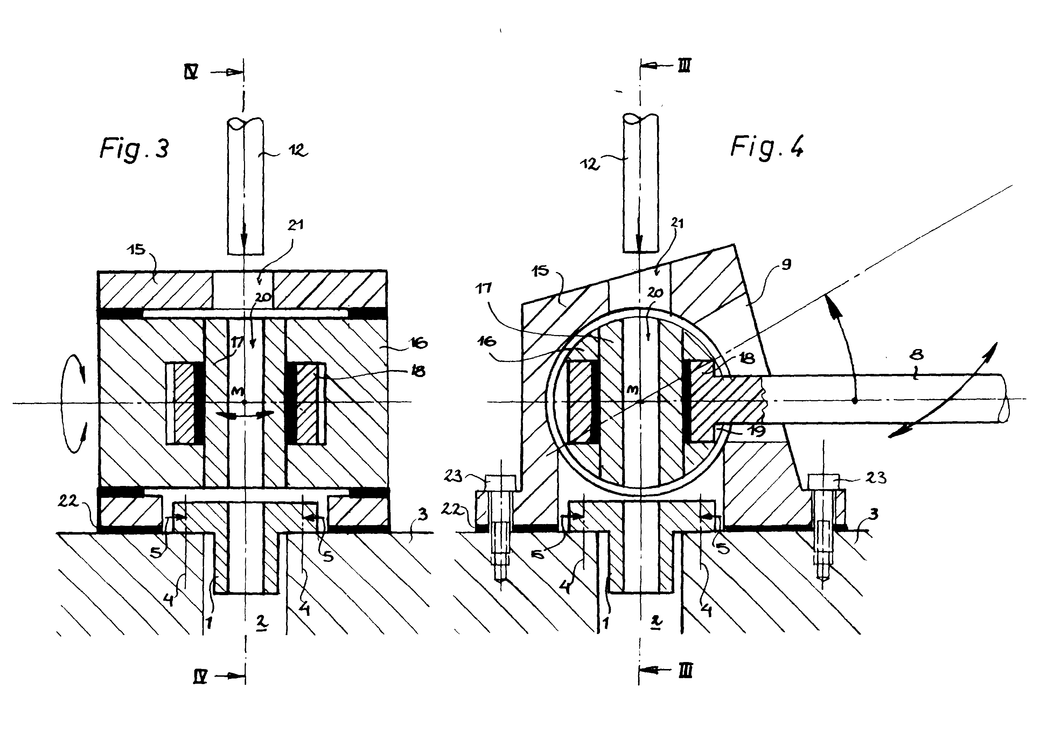

Ausführungsbeispiele des Erfindungsgegenstandes sind in den Zeichnungen dargestellt. Fig. 1 zeigt eine Gelenkanordnung mit Kugelgelenk im Schnitt nach der Linie I-I in Fig. 2, Fig. 2 die Gelenkanordnung im Schnitt nach der Linie II-II in Fig. 1, Fig. 3 eine Gelenkanordnung mit Schwenkwelle und Schwenkachse als Kreuzgelenk im Schnitt nach der Linie III-III in Fig. 4 und Fig. 4 die Gelenkanordnung im Schnitt nach der Linie IV-IV in Fig. 3.

Es wird von einem Parallelstabsystem in diesem Beispiel ausgegangen, das drei in Längsrichtung verfahrbare Schlitten umfasst. Jeder dieser drei Schlitten trägt zwei Stabgelenke für zwei Stäbe in der erfindungsgemäßen Gelenkanordnung. Die sechs Stäbe laufen auf einer Trägerplatte zusammen, auf der sie wieder in Gelenken dieser Gelenkanordnung gelagert sind. Das hier beispielsweise angesprochene Parallelstabsystem verfügt also insgesamt über 12 derartige Gelenkanordnungen für insgesamt 6 Stäbe.

Jede der erfindungsgemäßen Gelenkanordnungen verfügt gemäß Fig. 1 bis 4 über eine Flanschbüchse 1, die in einer Ausnehmung 2 eines Schlittens 3 bzw. der Trägerplatte befestigt ist. Dazu durchsetzen Schraubenbolzen (Mittellinien 4) die Flanschbüchsen 1 mit seitlichem Spiel und es sind in den Achsenrichtungen der Schlitten- bzw. Trägerplatttenebene verstellbare Justierschrauben 5 (als Pfeile angedeutet) in der Flanschbüchse 1 vorgesehen, die sich an den Schraubenbolzen abstützen. Im Feinmessraum erfolgt die positonsgenaue Justierung der Flanschbüchse 1 mit Hilfe dieser Justierschrauben 5.

Ein Gehäuse 6 nimmt gemäß Fig. 1 und 2 eine Gelenkskugel 7 auf, von der ein Stab 8 ausgeht. Der Stab 8 durchsetzt eine fensterartige Öffnung 9 im Gehäuse 6, deren Größe dem gesamten horizontalen und vertikalen Schwenkbereich entspricht. Um den Schwenkmittelpunkt M genau auf die im Feinmessraum einjustierte Bohrungsache der Flanschbüchse 1 auszurichten, ist in der Kugel 7 eine Bohrung 10 zentral vorgesehen. Solange Schrauben 11 des Gehäuses 6 in den spielgebenden Schraubenbohrungen noch nicht festgezogen sind, wird ein Justierstift 12 durch eine Gehäuseöffnung 13 in die Bohrung 10 eingeschoben und dieser Justierstift 12 in die Bohrung der Flanschbüchse 1 durchgeschoben. Dabei wird das Gelenk hinsichtlich seines Schwenkmittelpunktes exakt auf dem Schlitten 3 oder der Trägerplatte ausgerichtet. Es ist sodann bloß erforderlich die Schrauben 11 festzuziehen und den Justierstift 12 zu entfernen. Sobald alle Gelenke derart eingerichtet sind, kann die Werkzeug- oder Werkstückpositionierung über die Parallelstabkinematik erfolgen. Sollte auf der Werkzeugmaschine eine Kollision erfolgen, dann kann mit den einfachen Mitteln, die unmittelbar in der Werkshalle zur Verfügung stehen, eine Neupositionierung der Gelenke durchgeführt werden. Die Schrauben 11 werden gelöst, die Justierstifte 12 in die Kugelbohrungen 10 eingebracht und die Position der Schwenkmitte M durch Einschieben in die Flanschbüchse 1 aufgesucht. Nach Festziehen der Schrauben 11 ist die Werkzeugmaschine wieder einsatzbereit.

Erwähnt sei noch, dass die Höhenlageneinstellung des Schwenkmittelpunktes M durch Passplatten 14 erfolgt.

Die Fig. 3 und 4 zeigen eine praxisorientierte Alternative zu einem analog zu Fig. 1 und 2 justierbaren Gelenk im Rahmen der Parallelstabkinematik auf einer Werkzeugmaschine. Es ist wieder die Flanschbüchse 1 in der Ausnehmung 2 des Schlittens 3 oder der Trägerplatte durch die Justierschrauben 5 gegenüber den Schraubenbolzen 4 im Feinmessraum in zwei Achsenrichtungen einstellbar. Die Ausnehmung 2 sowie die Bohrungen für die Schrauben 4 weisen ausreichendes Spiel für diese Einstellung auf. Ebenso ist eine Ausnehmung des aufgesetzten Gehäuses 15 für das Gelenk so ausgeführt, dass genügend Spiel für das Positionieren des Gelenkes relativ zur Flanschbüchse 1 besteht.

Zum Unterschied zu Fig. 1 und 2 ist an Stelle eines Kugelgelenkes in Fig. 3 und 4 ein Kreuzgelenk realisiert, das eine Schwenkwelle 16 mit horizontaler Mittelachse und in der Schwenkwelle 16 eine vertikale Schwenkachse 17 umfasst. Die Schwenkwelle 16 ist im Gehäuse 15 drehbar gelagert. Die Schwenkachse 17 ist in der Schwenkwelle 16 in einer Normalebene zur Mittelachse der Schwenkwelle 16 fixiert. Auf der Schwenkachse 17 ist ein Ring 18 axial verschiebefest, jedoch drehbar gelagert, der den Stab 8 trägt. Ein Schlitz 19 in der Schwenkwelle 16 gestattet das Schwenken des Stabes 8 um die Schwenkachse 17, die selbst zusammen mit der Schwenkwelle 16 um deren horizontale Mittelachse eine Lageveränderung beschreibt. Die Schwenkwelle 16 und die Schwenkachse 17 bestimmen einen horizontalen und vertikalen Schwenkwinkel des Stabes 8, dem die Öffnung 9 in Gehäuse 15 entspricht. Der Schnittpunkt der Mittelachsen von Schwenkwelle 16 und Schwenkachse 17 legt die Schwenkmitte M fest.

In den Fig. 3 und 4 ist die horizontale Position des Stabes 8, parallel zur Schlittenebene, dargestellt. Eine zentrale Bohrung 20 in der Schwenkachse 17 durchsetzt den gesamten Querschnitt der Schwenkwelle 16. Diese Bohrung 20 setzt sich in der Bohrung der Flanschbüchse 1 fort. Ferner ist im Gehäuse 9 eine fluchtende Ausnehmung 21 vorgesehen. Der Justierstift 12 hat gleichen Durchmesser wie die Bohrung 20 sowie die Bohrung in der Flanschbüchse 1, sodass bei noch gelösten Schrauben 23 die Positionierung der Schwenkmitte M genau auf die feinjustierte Mittelachse der Flanschbüchsenbohrung 1 erfolgt. Nach Festziehen der Schrauben 23 und Entfernen des Justierstiftes 12 kann das Gelenk in Betrieb genommen werden. Zur Höhenjustierung sind wieder Passplatten 22 unterlegt.

## Patentansprüche

1. Gelenkanordnung für Werkzeugmaschinen zur stabkinematischen Positionierung von Werkzeug und Werkstück relativ zueinander, wobei auf der Werkzeugmaschine insbesondere drei Schlitten verfahrbar sind, die Gelenke für z.B. je zwei Stäbe tragen, deren andere Enden über Gelenke eine Trägerplatte für Werkzeug oder Werkstück im Raum festle gen, **dadurch gekennzeichnet**, dass auf den Schlitten (3) und bzw. oder der Trägerplatte für jedes Gelenk eine Flanschbüchse (1) mit Bohrung in der Schlitten- bzw. Trägerplattenebene feinjustierbar befestigt ist, dass der Flanschbüchse (1) ein Gehäuse (6, 15) für das Gelenk, beispielsweise eine Gelenkskugel (7) oder ein Gelenkskreuz, mit angeschlossenem Stab (8) oder einer Stabhalterung, zugeordnet ist und das Gelenk in seinem mit dem Stab (8) oder der Stabhalterung unmittelbar verbundenen Gelenksteil eine durchgehende Bohrung (10, 20) durch den Schwenkmittelpunkt (M), beispielsweise Kugelmittelpunkt oder Gelenkskreuzmittelpunkt, aufweist, die zur Positionierung des Schwenkmittelpunktes (M) fluchtend auf die Bohrung der Flanschbüchse (1) ausrichtbar und das Gehäuse (6, 15) reibungsschlüssig mit dem Schlitten (3) oder der Trägerplatte festschraubbar ist.

2. Gelenkanordnung nach Anspruch 1, **dadurch gekennzeichnet,** dass das Gelenkskreuz eine drehbar im Gehäuse gelagerte Schwenkwelle (16) in einer Parallelebene zur Schlitten- oder Trägerplattenebene aufweist und dass die Schwenkwelle (16) eine Schwenkachse (17) trägt, die in einer Normalebene zur Mittelachse der Schwenkwelle (16) drehbar ist und die mit der durchgehenden Bohrung (20) für das fluchtende Ausrichten des Schwenkmittelpunktes (M) mit der Achse der Bohrung der Flanschbüchse (1) ausgebildet ist.

3. Gelenkanordnung nach Anspruch 2, **dadurch gekennzeichnet,** dass auf der Schwenkachse (17) der Stab (8) oder die Stabhalterung schwenkbar gelagert ist und die Stabachse den Schwenkmittelpunkt (M) durchsetzt.

4. Gelenkanordnung nach den Ansprüchen 2 und 3, **dadurch gekennzeichnet,** dass in Längsmitte und einem Durchmesser der Schwenkwelle (16) folgend die Schwenkachse (17) eingesetzt ist, die beiderseits in der Zylinderfläche der Schwenkwelle (16) endet und die die durchgehende den Schwenkmittelpunkt (M) durchsetzende Bohrung (20) aufweist und dass auf der Schwenkachse (17) mindestens ein Lagerring (18) mit dem radial anschließenden Stab (8) oder der Stabhalterung drehbar vorgesehen ist.

5. Gelenkanordnung nach einen der Ansprüche 2 bis 4, **dadurch gekennzeichnet,** dass die Schwenkwelle (16) einen Schlitz (19) im Ausmaß des Schwenkwinkels des Stabes (8) oder der Stabhalterung um die Schwenkachse (17) und das Gehäuse (6, 15) eine entsprechende Ausnehmung (9) im Ausmaß der Schwenkwinkel der Schwenkwelle (16) und der Schwenkachse (17) aufweist.

6. Gelenkanordnung nach einen der Ansrpüche 1 bis 5, **dadurch gekennzeichnet,** dass das Gehäuse (6, 15) eine Öffnung (13, 21) in Fortsetzung der fluchtenden Bohrungen (10, 20) im Gelenk und in der Flanschbüchse (1) aufweist und dass ein Justierstift (12) vorgesehen ist, dessen Durchmesser den Bohrungsdurchmessern entspricht und der zum Ausrichten des Schwenkmittelpunktes (M) auf die Flanschbüchsenachse in die Bohrungen (10, 20) einschiebbar ist.

7. Gelenkanordnung nach einen der Ansprüche 1 bis 6, **dadurch gekennzeichnet,** dass das Gehäuse (6, 15) wie bekannt, durch Passplatten (14, 22) gegenüber der Schlitten- bzw. Trägerplattenebene höhenjustierbar ist.
